Europäisches Patentamt

European Patent Office

Office européen des brevets

(11) Veröffentlichungsnummer: **0 249 997**
**A2**

(12) **EUROPÄISCHE PATENTANMELDUNG**

(21) Anmeldenummer: **87108836.5**

(22) Anmeldetag: **19.06.87**

(51) Int. Cl.⁴: **G11B 23/023**

(30) Priorität: **20.06.86 DE 3620729**

(43) Veröffentlichungstag der Anmeldung:
**23.12.87 Patentblatt 87/52**

(84) Benannte Vertragsstaaten:
**CH DE FR GB IT LI**

(71) Anmelder: **Raasch, Hans**
**Amselstrasse 1**
**D-4050 Mönchengladbach 3(DE)**

(72) Erfinder: **Raasch, Hans**
**Amselstrasse 1**
**D-4050 Mönchengladbach 3(DE)**

(74) Vertreter: **Häpe, Werner**
**Bockmühlstrasse 13**
**D-4050 Mönchengladbach 1(DE)**

(54) **Stapelbox für Kompakttonband-Kassetten.**

(57) Stapelbox zur Aufnahme von Kassettenbehältern für Kompakttonbandkassetten, die für jeden Kassettenbehälter (14) einen schubladenförmigen Aufnahmerahmen (3) aufweist, der auf die Bedienungsperson zu aus der Stapelbox heraus bewegbar ist.

Fig. 1

## Stapelbox für Kompakttonband-Kassetten

Die Erfindung betrifft eine Stapelbox für Kompakttonband-Kassetten. Bespielte und unbespielte Kompakttonband-Kassetten werden in der Regel in Kassettenbehältern aus Kunststoff vertrieben, deren aufklappbarer Deckel eine Aufnahmetasche für die Kassette hat. Wenn der Deckel geschlossen wird, schwenken die Bohrungen der Tonbandspulen auf 2 Dorne des Kassettenbehälters Damit ist die Kassette gegen Verstauben, Beschädigungen und unbeabsichtigtes Abziehen des Tonbandes geschützt. Der Kassettenbehälter enthält neben der Kassette noch eine bedruckte oder zu beschriftende Einlage mit Angaben über den Tonbandinhalt.

Für das Aufnehmen einer Vielzahl von Cassettenbehältern gibt es Stapelboxen, in die die Behälter eingeschoben werden. Zum Entnehmen der Kassetten aus dem Kassettenbehälter muß der Kassettenbehälter aus der Stapelbox entnommen werden. Mit der OS 2 820 606 ist eine Kassettenstapelbox vorgeschlagen worden, in die die Kassettenbehälter in schräg angeordneten Fächern aufgenommen werden. Zum Entnehmen der Kassette wird der Kassettenbehälter in ein besonders gestaltetes Fach eingelegt, wobei der Deckel des Kassettenbehälters auf Rippen zu liegen kommt, so daß der Deckel damit aufgeklappt wird. Die Handhabung ist umständlich, da die Kassettenbehälter zum Öffnen umgesteckt werden müssen. Immerhin erfüllt diese Stapelbox die Forderung, daß die Benutzung mit einer Hand möglich ist, was bei der Handhabung in einem Kraftfahrzeug besonders vorteilhaft ist.

Besonders für die Benutzung in Kraftfahrzeugen sind Stapelboxen bekannt, bei denen die Tonbandkassetten in Schubladen eingelegt werden. Durch Federn können die Schubladen bei Auslösung durch Knopfdruck selbst tätig aufgeschoben werden. Es ist aber nachteilig, daß die Tonbandkassetten zum Ablegen in die Stapelbox aus ihren Behältern entnommen werden müssen. Die Kassettenbehälter müssen für die spätere Aufnahme der Tonbandkassetten aufgehoben werden, außerdem bleiben die Informationen über den Inhalt der Kassette im Kassettenbehälter. Es gibt auch Vorschläge über die Ausbildung der Schubladen, um die Informationseinlage in die Schublade zu übernehmen und sichtbar zu machen. Dies ist aber umständlich, besonders wenn, wie in einem Kraftfahrzeug, der Inhalt der Stapelbox öfter gewechselt wird.

Erfindungsgemäß wird deshalb vorgeschlagen, in der Stapelbox die Kassettenbehälter in schubladenförmigen Aufnahmerahmen aufzunehmen, wobei nach dem Herausziehen des Aufnahmerahmens aus der Stapelbox der Kassettendeckel durch Federelemente so weit aufgeklappt wird, daß der Deckel leicht von Hand zu öffnen ist. Der Aufnahmerahmen ist mit Anschlägen versehen, die den Deckel des Kassettenbehälters in einer geöffneten Stellung halten, in der ein griffgünstiges Herausnehmen und Hereinlegen der Kassette möglich ist. Der Aufnahmerahmen ist so ausgebildet, daß an der Stirnseite die Beschriftung des Kassettenbehälters gut zu erkennen ist. Die Erfindung ermöglicht das unkomplizierte Herausnehmen und Zurücklegen einer Tonbandkassette aus einem Kassettenbehälter mit nur einer Hand.

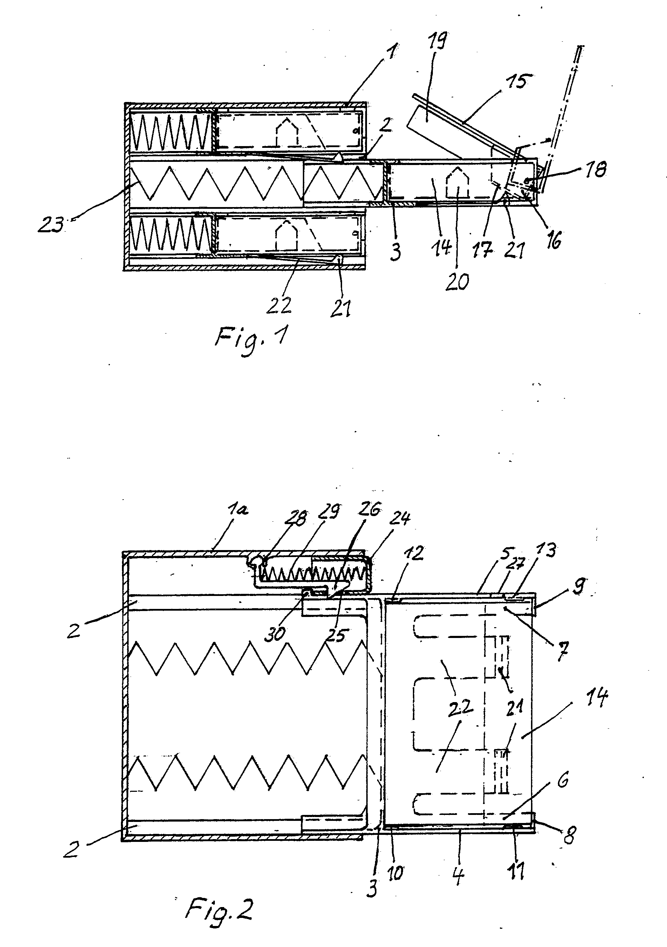

Fig. 1 zeigt den Querschnitt durch eine Aufnahmebox mit 3 Aufnahmerahmen. Der mittlere Aufnahmerahmen ist herausgeschoben zur Entnahme einer Kassette. Fig. 2 zeigt die Draufsicht auf die aufgeschnittene Aufnahmebox mit einem herausgeschobenen Aufnahmerahmen.

Die Stapelbox weist ein auf einer Seite offenes Gehäuse (1) auf, welches z.B. als Kunststoff-Spritzgußteil aus geführt sein kann. An den Seitenwänden sind Stege (2) angespritzt. Sie dienen als Führungen für den Aufnahmerahmen (3) des Kassettenbehälters (14). Wie in Fig. 2 gut erkennbar ist, hat der Aufnahmenrahmen eine H-förmige Form. Vorteilhaft wird er aus einem elastischen Kunststoff im Spritzgußverfahren hergestellt. Die Seitenwangen 4 und 5 des Aufnahmerahmens haben auf der Unterseite Stege 6 und 7 und an der Stirnseite Anschläge 8 und 9. An der Oberkante der Seitenwangen sind Rastleisten 10, 11 und 12, 13 vorgesehen. Der Kassettenbehälter 14 wird in den Aufnahmerahmen eingelegt, wobei die Seitenwangen 4 und 5 vorne so weit aufgebogen werden, daß der Kassettenbehälter 14 an den vorderen Rastleisten 11 und 13 vorbeirutschen kann. Werden die Seitenwangen freigegeben, legen sie sich an den Seitenwänden des Kassettenbehälters 14 an und die Rastleisten greifen über die Seitenwände des Kassettenbehälters. Er ist damit gegen Herausrutschen nach oben gesichert. Die Anschläge 8 und 9 sichern den Kassettenbehälter 14 stirnseitig. Er ist also fest in dem Aufnahmerahmen gehalten.

Wie in Fig. 1 am mittleren aufgeschobenen Aufnahmerahmen erkennbar, bildet der Deckel 15 des Kassettenbehälters 14 mit der Stirnseite 16 und einem Teil des Bodens 17 eine Tasche. Um den Zapfen 18 ist der Deckel in der Seitenwand des Kassettenbehälters schwenkbar. In der Tasche des Deckels 15 ist die Kassette 19 aufgenommen.

Wird der Deckel 15 zugeklappt, so zentrieren sich die Bohrungen der Kassettenspulen auf den Dornen 20, die am Boden des Kassettenbehälters angespritzt sind.

Auf das Bodenteil 17 der Aufnahmetasche des Deckels wirkt der Nocken 21 ein, der Teil einer Biegefeder 22 ist. Durch die Wirkung der Biegefeder 22 wird der Nocken 21 hochgedrückt und damit der Deckel 15 des Kassettenbehälters 14 in die gezeichnete Position aufgedrückt. In dieser Position kann man ihn recht gut erfassen und weiter öffnen, was in der strichpunktierten Position dargestellt ist.

In Fig. 2 ist erkennbar, daß die Biegefeder 22 und der Nocken 21 mit dem Aufnahmerahmen verbunden, vorzugsweise direkt angespritzt sind. Wird der Deckel des Kassettenbehälters zugedrückt, wird der Nocken 21 nach unten gedrückt. Er hat im eingeschobenen Zustand des Aufnahmerahmens Platz zwischen 2 Kassettenbehältern. Da die Kraft der Biegefedern 22 auch im eingeschobenen Zustand des Aufnahmerahmens wirkt, wird der Deckel des Kassettenbehälters gegen die Führungsstege 2 gedrückt. Damit ist der Aufnahmerahmen gegen Herausrutschen gesichert. Wird der Aufnahmerahmen herausgezogen, so springt der Deckel auf, sobald er seine Anlage an den Stegen 2 verliert. Man kann den Deckel nun erfassen und so weit aufklappen, daß er etwas über 90° aufgeklappt ist. Die Höhe der Anschläge 8 und 9 an der Stirnseite des Aufnahmerahmens sind so bemessen, daß der Deckel in dieser Stellung gehalten wird. Die Kassette kann in dieser Stellung gut gehandhabt werden.

Eine weitere Erleichterung der Handhabung der Kassetten wird erreicht, wenn in an sich bekannter Weise Federn 23 vorgesehen sind, die beim Einschieben des Aufnahmerahmens 3 gespannt werden, so daß nach Auslösen einer Rastung der Aufnahmerahmen selbsttätig herausgeschoben wird. In Fig. 2 ist erkennbar, wie beispielsweise die Rastung und die Auslösung ausgebildet sein kann.

Der Auslösetaster 24 ist zwischen der Seitenwand 1a des Gehäuses 1 und der Seitenwange 5 geführt. Er hat eine Aussparung 25 durch die der Sperrhaken 26 in eine Aussparung 27 in der Seitenwange 5 des Aufnahmerahmens 3 greift, wenn er voll eingeschoben ist. Der Sperrhaken 26 ist in der Tasche 28 gelagert. Die Druckfeder 29 drückt den Sperrhaken gegen die Seitenwange des Aufnahmerahmens und den Auslösetaster nach außen. Drückt man auf den Auslösetaster 24, so schiebt sich die Aussparung 25 an der Nase des Sperrhakens 26 vorbei und drückt diese aus der Aussparung 27 des Aufnahmerahmens heraus. Die Rastung ist damit aufgehoben und der Aufnahmerahmen wird durch die Wirkung der Druckfedern nach vorne geschoben. Der Anschlag 30 am Aufnahmerahmen begrenzt den Weg beim Herausschieben.

## Ansprüche

1. Stapelbox zur Aufnahme von Kassettenbehältern für Kompakttonbandkassetten, dadurch gekennzeichnet, daß die Stapelbox für jeden Kassettenbehälter (14) einen schubladenförmigen Aufnahmerahmen (3) aufweist, der auf die Bedienungsperson zu aus der Stapelbox heraus bewegbar ist.

2. Stapelbox nach Anspruch 1, dadurch gekennzeichnet, daß der Aufnahmerahmen (3) auf den Deckel (15) des Kassettenbehälters (14) im öffnenden Sinne einwirkbare vorzugsweise federnde Elemente (21, 22) aufweist.

3. Stapelbox nach Anspruch 1 oder 2, dadurch gekennzeichnet, daß der Aufnahmerahmen (3) Anschläge (8, 9) aufweist, zur Begrenzung des Öffnungswinkels des Deckels (15).

4. Stapelbox nach einem der Ansprüche 1 bis 3, dadurch gekennzeichnet, daß der Aufnahmerahmen (3) an seiner der Bedienungsperson zugewandten Stirnseite mindestens teilweise offen ist.

5. Stapelbox nach Anspruch 4, dadurch gekennzeichnet, daß die stirnseitige Öffnung des Aufnahmerahmens (3) durch seitliche Anschläge (8, 9) für den Kassettenbehälter (14) begrenzt ist.

6. Stapelbox nach Anspruch 3 und 5, dadurch gekennzeichnet, daß die seitlichen Anschläge (8, 9) durch entsprechende Bemessung ihrer Höhe zugleich zur Begrenzung des Öffnungswinkels des Deckels (15) dienen.

7. Stapelbox nach Anspruch 5, dadurch gekennzeichnet, daß die Anschläge an den Seitenwangen (4, 5) des schubladenförmigen Aufnahmerahmens (3) angeordnet sind.

8. Stapelbox nach Anspruch 7, dadurch gekennzeichnet, daß die Seitenwangen (4, 5) seitlich derart ausschwenkbar sind, daß der Kassettenbehälter (14) in den Aufnahmerahmen (3) einlegbar ist.

9. Stapelbox nach Anspruch 1 oder einem der folgenden, dadurch gekennzeichnet, daß zur Bewegung des Aufnahmerahmens (3) in dem Gehäuse (1) der Stapelbox Federn (23) gelagert sind.

10. Stapelbox nach Anspruch 9, dadurch gekennzeichnet, daß das Gehäuse (1) auf jeden Aufnahmerahmen (3) einwirkende Rasterungen (26) aufweist, die mittels je eines Tasters (24) lösbar sind.

Fig. 1

Fig. 2